# EUROPEAN PATENT APPLICATION

(11) **EP 3 412 426 A1**
(43) Date of publication of application: **12.12.2018**
(21) Application number: 17747398.0
(22) Date of filing: 31.01.2017
(51) Int. Cl.: B29C 49/42, B29C 49/04, B29C 49/32

(54) **BLOW MOLDING APPARATUS AND BLOW MOLDING METHOD**

(30) Priority: 04.02.2016 JP 2016019965
(71) Applicant: Toyo Seikan Co., Ltd., Tokyo 141-8640 (JP)
(72) Inventor: NAGATA Kouji, Yokohama-shi Kanagawa 230-0001 (JP); YONEDA Atsushi, Yokohama-shi Kanagawa 230-0001 (JP); KANEKO Eiichiro, Yokohama-shi Kanagawa 230-0001 (JP); SASAJIMA Nobuhiro, Yokohama-shi Kanagawa 230-0001 (JP)
(74) Representative: Haseltine Lake LLP
(86) International application number: PCT/JP2017/003384
(87) International publication number: WO 2017/135242

(57) **Abstract**

A blow molding apparatus is provided, which improves productivity while being suitable for high-mix, low-volume production and with which a high-quality molded product is obtained by supplying a good-quality parison to molds.

A blow molding apparatus 1 includes: a die head 2 which discharges a parison; a parison supplying part 3 which cuts the discharged parison at a preset length and conveys the cut parison; and a blow molding part 4 in which the supplied parison is clamped between blow molds 40 so as to perform blow molding, wherein the parison supplying part 3 has a pickup chuck 10 which conveys the cut parison alternately to a first supplying position S1 set on one of right and left sides with respect to a discharge center P0 of the die head 2 and a second supplying position S2 set on the other of right and left sides with respect to the discharge center P0, and the blow molding part 4 performs blow molding at the blow molds 40 that are arranged at the first supplying position S1 and the second supplying position S2, respectively.

## Description

### [Technical Field]

The present invention relates to a blow molding apparatus and a blow molding method for performing blow molding by supplying a parison discharged from a die head to a blow mold.

### [Background Art]

As blow molding by which a hollow container and the like are molded, a molding method (a direct blow molding method) is known in which a thermoplastic molten discharged material (hereinafter, referred to as a parison) having a hollow pipe shape which is discharged from a die head is clamped between blow molds and blow air is blown into the parison inside the molds.

Blow molding apparatuses which perform such blow molding can be broadly classified according to types of movement of a mold into: a rotary type in which a plurality of molds are sequentially moved to a parison supplying position along an annular path; and a shuttle type in which one or a plurality of molds are linearly moved to the parison supplying position. A rotary type blow molding apparatus is suitable for mass-producing one type of a hollow container due to a large number of molds arranged on an annular path, but a shuttle type blow molding apparatus is suitable for high-mix, low-volume production which requires a small number of molds to be frequently replaced.

With a shuttle type blow molding apparatus, although die heads are arranged in plurality and simultaneous molding is performed using a plurality of molds in order to improve productivity, the use of a plurality of die heads creates a variation in quality of discharged parisons themselves, which makes it difficult to secure uniform quality of molded products. In contrast, the conventional art described in PTL 1 below proposes improving productivity of a shuttle type blow molding apparatus by moving a plurality of molds to a parison supplying position in an efficient manner. PTL 1 describes a blow molding apparatus which supplies a parison into molds by arranging, to the right and left of a single parison, two each of four stages which move in an X-Y direction perpendicular to a central axis (a vertical axis) of the single parison and sequentially moving molds installed on each stage to a parison discharging position.

### [Citation List]

### [Patent Literature]

[PTL 1] Japanese Patent Application Laid-open No. 2000-313056

### [Summary of Invention]

### [Technical Problem]

In a single rotary type blow molding apparatus, during a period of time required by one of a large number of molds arranged on an annular path to make one revolution and return to its original position, step times such as a time required for supplying a parison to molds, a blow time, and a time required for extracting a molded product from the molds are allocated at a fixed ratio. Therefore, for example, in order to extend the blow time, a speed of movement of molds must be reduced, which causes productivity to decline. In addition, an optimal mold size may be subjected to restrictions based on the number of molds and a turning radius. Furthermore, when replacing molds in order to accommodate a wide variety of molded products, since a large number of molds constitute a single set, replacing the molds requires a significant amount of time. Accordingly, rotary type blow molding apparatuses are not suitable for high-mix, low-volume production.

In contrast, since a shuttle type blow molding apparatus enables a blow time to be adjusted regardless of operation times of other steps and only requires a short period of time for replacing molds due to the small number of used molds, shuttle type blow molding apparatuses are suitable for high-mix, low-volume production. However, as in the case of the conventional art described earlier, improving productivity by sequentially moving a plurality of molds to a parison supplying position problematically prevents sufficiently high productivity from being attained because there is a limit to how fast heavy molds can be moved along a complex path.

In addition, in conventional art in which a parison discharged from a die head is directly clamped between molds, since a discharge speed of the parison also restricts productivity, there is a further problem in that it is difficult to supply a good-quality parison to the molds due to an occurrence of a drawdown in the parison discharged from the die head or an occurrence of an accumulation of a parison above the molds immediately after the parison is clamped between the molds.

The present invention has been proposed in order to address such problems, and an object of the present invention is to improve productivity in blow molding while being suitable for high-mix, low-volume production, to obtain a high-quality molded product by supplying a good-quality parison to molds, and the like.

### [Solution to Problem]

In order to solve the problems described above, a blow molding apparatus according to the present invention is configured as follows.

A blow molding apparatus including: a die head which discharges a parison; a parison supplying part which cuts the discharged parison at a preset length and conveys the cut parison; and a blow molding part in which the supplied parison is clamped between blow molds so as to perform blow molding, wherein the parison supplying part has a pickup chuck which conveys the cut parison alternately to a first supplying position set on one of right and left sides with respect to a discharge center of the die head and a second supplying position set on the other of right and left sides with respect to the discharge center, and in the blow molding part, the supplied parison is clamped between the blow molds that are arranged at the first supplying position and the second supplying position, respectively.

In addition, a blow molding method according to the present invention is configured as follows.

A blow molding method including: a parison supplying step of cutting, at a preset length, a parison discharged from a die head and conveying the cut parison; and a blow molding step of performing blow molding by the supplied parison being clamped between blow molds, wherein the parison supplying step conveys the parison discharged from the die head alternately to a first supplying position set on one of right and left sides with respect to a discharge center of the die head and a second supplying position set on the other of right and left sides with respect to the discharge center, and the blow molding step is performed by the supplied parison being clamped between the blow molds that are arranged at the first supplying position and the second supplying position, respectively.

### [Advantageous Effects of Invention]

A blow molding apparatus and a blow molding method configured as described above are capable of improving productivity while being suitable for high-mix, low-volume production. In addition, by supplying a good-quality parison to molds, a high-quality molded product can be obtained.

### [Brief Description of Drawings]

Fig. 1(a) and Fig. 1(b) are explanatory diagrams showing equipment configuration example of a blow molding apparatus according to an embodiment of the present invention (Fig. 1(a) shows a state where a parison is supplied to a first supplying position and Fig. 1 (b) shows a state where a parison is supplied to a second supplying position).
Fig. 2(a) and Fig. 2(b) are explanatory diagrams showing another configuration example of a pickup chuck (Fig. 2 (a) shows a state after supplying a parison to a first supplying position and before supplying a parison to a second supplying position, and Fig. 2 (b) shows a state after supplying a parison to the second supplying position and before supplying a parison to the first supplying position).
Fig. 3 is an explanatory diagram showing operation steps (a blow molding method) of the blow molding apparatus shown in Fig. 1.
Fig. 4 is an explanatory diagram showing another equipment configuration example of a blow molding apparatus according to an embodiment of the present invention.
Fig. 5 is an explanatory diagram showing operation steps (a blow molding method) of the blow molding apparatus shown in Fig. 4.
Fig. 6 is an explanatory diagram showing a configuration example of a parison supplying part in a blow molding apparatus according to an embodiment of the present invention.
Fig. 7(a) to Fig. 7(e) are explanatory diagrams explaining an operation example of the parison supplying part shown in Fig. 6 (Fig. 7(a) to Fig. 7(e) show operation timings of respective stages).
Fig. 8 is an explanatory diagram showing an extracting apparatus and a label inserter.
Fig. 9 is an explanatory diagram showing a bottle extraction operation (bottle gripping).
Fig. 10 is an explanatory diagram showing a bottle extraction operation (mold opening).
Fig. 11 is an explanatory diagram showing a label inserting operation.
Fig. 12 is an explanatory diagram showing a bottle extraction operation (extraction completion).
Fig. 13 is an explanatory diagram showing a timing chart of a mold opening/closing operation of blow molds, a support arm moving operation of an extracting apparatus, and a label attaching operation of a label inserter.

### [Description of Embodiments]

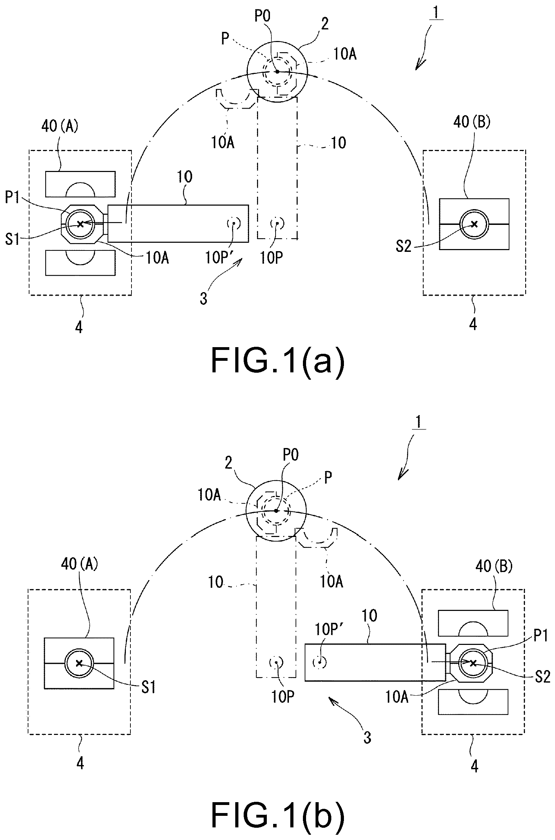

Hereinafter, an embodiment of the present invention will be described with reference to the drawings. A same reference sign in different drawings in the following description indicates a common portion and redundant descriptions will be omitted as appropriate. As shown in Fig. 1, a blow molding apparatus 1 is provided with: a die head 2 which discharges a parison; a parison supplying part 3 which cuts the discharged parison at a preset length and conveys the cut parison; and a blow molding part 4 in which the supplied parison is clamped between blow molds 40 to perform blow molding. In the following description, a parison discharged from the die head 2 will be referred to as a "parison P" and a cut parison will be referred to as a "parison P1".

The die head 2 has a vertically downward discharge port and discharges the extruded parison P having a hollow cylindrical shape vertically downward at a prescribed discharge speed. P0 in Fig. 1 indicates a discharge center of the die head 2 which matches an axial center of the discharged parison P.

The parison supplying part 3 is provided with a pickup chuck 10 which grasps and conveys the parison P1 cut at a prescribed length from a single discharged parison P. The pickup chuck 10 conveys the cut parison P1 alternately to a first supplying position S1 set on one of right and left sides with respect to the discharge center P0 of the die head 2 and a second supplying position S2 set on the other of right and left sides with respect to the discharge center P0. While the first supplying position S1 and the second supplying position S2 are each set at one location on the left or right side in this case, this configuration is not restrictive, and a plurality of supplying positions may be set at a plurality of locations on one of the right and left sides and a plurality of supplying positions may be set at a plurality of locations on the other of the right and left sides.

The pickup chuck 10 shown in Fig. 1 is provided with a chuck part 10A on one end side (a distal end side), and grasps and holds the discharged parison P with the chuck part 10A. In addition, as the pickup chuck 10 rotates around a rotation center 10P provided on the other end side (a base end side), the chuck part 10A conveys the parison P1 while tracing a circular path.

As a conveyance route of the parison P1 from the discharge center P0 to the first supplying position S1 or the second supplying position S2, the parison P1 may be conveyed by sliding the rotation center 10P of the pickup chuck 10 to 10P' so that the chuck part 10A traces a linear path after tracing a circular path or the parison P1 may be conveyed solely along a circular path. In addition, the parison P1 may be conveyed by sliding the rotation center 10P of the pickup chuck 10 to 10P' while a circular path is being traced, or the pickup chuck 10 may be rotated while the rotation center 10P of the pickup chuck 10 is being slid and the parison P1 may be conveyed by stopping the slide at 10P' after the rotation ends. Moreover, when supplying positions are provided in plurality on right and left sides of the discharge center, respectively, the conveyance route of the pickup chuck 10 is to be appropriately set in accordance with the supplying positions.

While the pickup chuck 10 rotates around the rotation center 10P by 180 degrees in the example shown in Fig. 1 to cut, at a preset length, a single parison P discharged from the die head 2 and distribute the cut parison to the first supplying position S1 and the second supplying position S2 on right and left sides, the angle of rotation can be appropriately set in accordance with positions of the first supplying position S1 and the second supplying position S2.

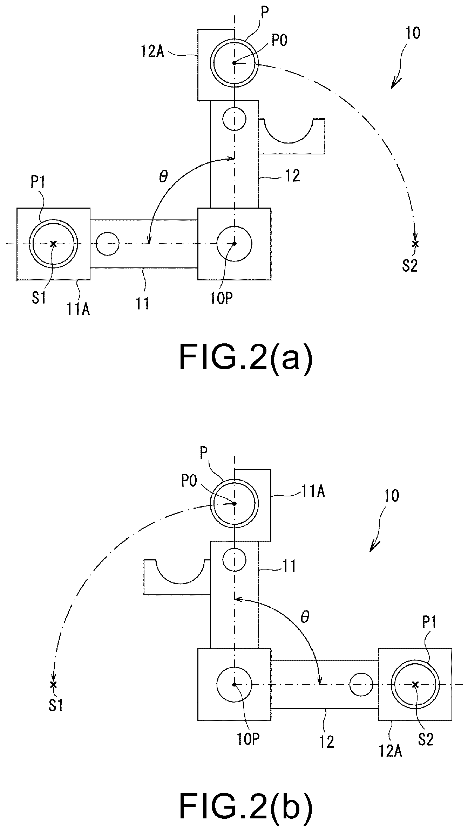

In addition, as shown in Fig. 2, by configuring the pickup chuck 10 with a first pickup chuck 11 and a second pickup chuck 12 provided so as to form a preset angle θ (90 degrees in the example shown in Fig. 2) therebetween around the rotation center 10P, a rotation range of the pickup chuck 10 can be further reduced and a time required for supplying a parison can be shortened.

In this case, as shown in Fig. 2(a), a chuck part 12A on one end side of the second pickup chuck 12 is positioned at the discharge center P0 of the parison P in a state where a chuck part 11A on one end side of the first pickup chuck 11 has moved to the first supplying position S1, and as shown in Fig. 2(b), the chuck part 11A on the one end side of the first pickup chuck 11 is positioned at the discharge center P0 of the parison P in a state where the chuck part 12A on the one end side of the second pickup chuck 12 has moved to the second supplying position S2. As a result, the rotation range of the pickup chuck 10 is kept under the preset angle θ (90 degrees). Moreover, the rotation of the pickup chuck 10 (the conveyance route of the parison P1) shown in Fig. 2 is not limited to a circular path and the parison P1 may be conveyed along a combination of a circular path and a linear path in a similar manner to the pickup chuck 10 shown in Fig. 1 described earlier.

The blow molding part 4 is provided with the blow molds 40 at each of the first supplying position S1 and the second supplying position S2, and performs blow molding by the parison P1 supplied to each supplying position being clamped between the blow molds 40. In the illustrated example, first blow molds 40(A) are installed at the first supplying position S1 and second blow molds 40(B) are installed at the second supplying position S2. Each blow mold 40 does not move and only performs opening/closing operations at a fixed position.

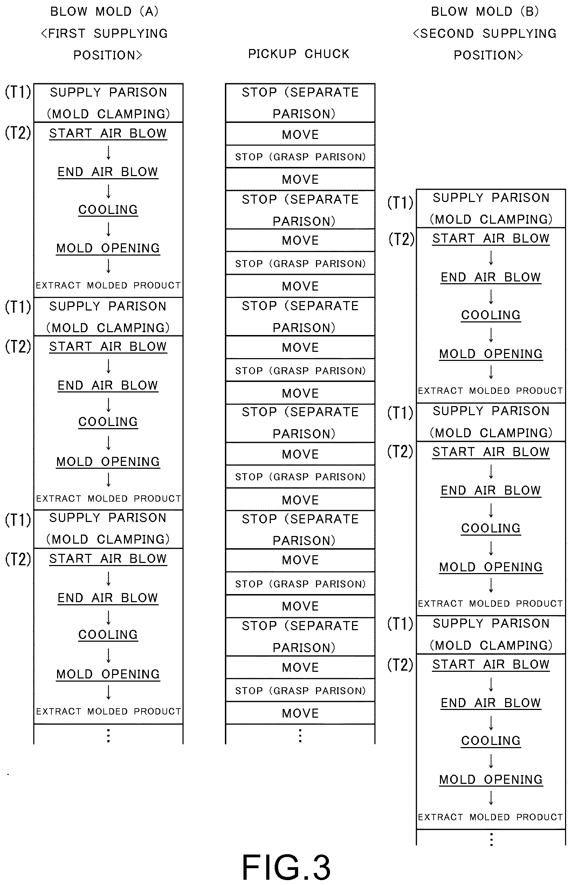

Fig. 3 shows an example of operation steps of the blow molding apparatus 1 shown in Fig. 1. The pickup chuck 10 repetitively moves and stops at prescribed timings to repetitively perform operations of: grasping the parison P at the discharge center P0; conveying the parison P1 cut at a preset length; releasing the parison P1 at the first supplying position S1; returning towards the discharge center P0; grasping the parison P at the discharge center P0; conveying the parison P1 cut at a preset length; and releasing the parison P1 at the second supplying position S2.

In contrast, at the blow molding part 4 that is arranged at the first supplying position S1 and the second supplying position S2, respectively, a parison supplying step T1 of supplying the parison P1 conveyed by the pickup chuck 10 to the blow molds 40 and a blow molding step T2 are independently repeated.

In the parison supplying step T1, an operation of the supplied parison P1 being clamped between molds by mold clamping is performed, and in the blow molding step T2, a series of operations including starting air blow to the parison P1 clamped between the molds, ending the air blow, cooling, mold opening, and extracting a molded product is performed.

In this case, by appropriately modifying operation timings of the pickup chuck 10 at the blow molding part 4 on one side, since a period of time between a given parison supplying step T1 and a next parison supplying step T1 can be appropriately set and the respective steps of the blow molding step T2 can be appropriately set within the period of time, settings of a blow time and the like can be appropriately modified in accordance with high-mix, low-volume production.

In addition, each blow molding part 4 can start the blow molding step T2 of the first blow molds 40(A) (start air blow to the first blow molds 40(A)) during a period from supplying the parison P1 to the first blow molds 40(A) at the first supplying position S1 to supplying the parison P1 to the second blow molds 40(B) at the second supplying position S2, and start the blow molding step T2 of the second blow molds 40(B) (start air blow to the second blow molds 40(B)) during a period from supplying the parison P1 to the second blow molds 40(B) at the second supplying position S2 to supplying the parison P1 to the first blow molds 40(A) at the first supplying position S1.

Accordingly, since step times of the blow molding step T2 of a plurality of blow molding parts 4 can be advanced so as to partially overlap each other, the plurality of blow molding parts 4 can be operated in an efficient manner and high productivity can be obtained. In doing so, since the example shown in Fig. 1 does not include movement of the blow molds 40, an operation speed of the pickup chuck 10 can be increased and productivity of the entire blow molding apparatus 1 can be improved.

In addition, according to the blow molding apparatus 1, since the parison P1 cut at a prescribed length from the parison P discharged from the die head 2 is grasped by the pickup chuck 10 and supplied to each blow mold 40, the accumulation of a parison above molds and the like can be eliminated as compared to a case where the discharged parison P is directly clamped between molds, and a parison with good quality can be supplied. As a result, the quality of a molded product can be improved.

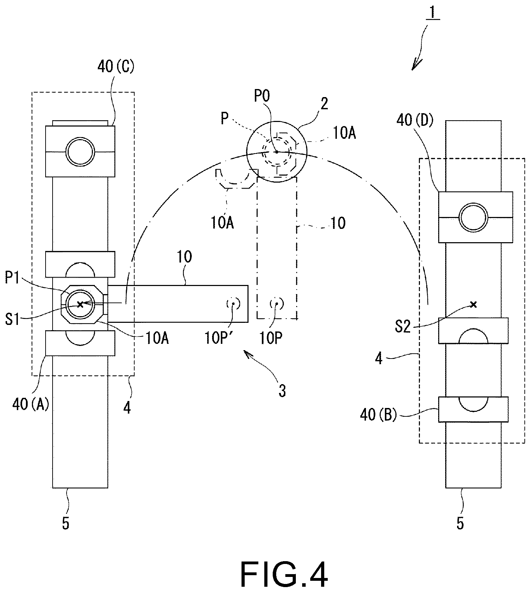

Fig. 4 shows another equipment configuration of the blow molding apparatus 1. In this example, at each of the first supplying position S1 and the second supplying position S2, the blow molding part 4 is provided with a plurality of blow molds 40, and a mold moving mechanism 5 which linearly moves the plurality of blow molds 40 in a reciprocating manner is provided. Otherwise, the configuration is similar to that of the example shown in Fig. 1.

Specifically, in the example shown in Fig. 4, the first blow molds 40(A) and third blow molds 40(C) are arranged with respect to the first supplying position S1, the second blow molds 40(B) and fourth blow molds 40(D) are arranged with respect to the second supplying position S2, and the pickup chuck 10 sequentially conveys the parison P1 cut from one discharged parison P to the first blow molds 40(A), the second blow molds 40(B), the third blow molds 40(C), and the fourth blow molds 40(D).

With respect to the first supplying position S1, the mold moving mechanism 5 moves the first blow molds 40(A) to the first supplying position S1 while simultaneously causing the third blow molds 40(C) to move (retreat) from the first supplying position S1, and causes the first blow molds 40(A) to move (retreat) from the first supplying position S1 while simultaneously moving the third blow molds 40(C) to the first supplying position S1. In addition, with respect to the second supplying position S2, the mold moving mechanism 5 moves the second blow molds 40(B) to the second supplying position S2 while simultaneously causing the fourth blow molds 40(D) to move (retreat) from the second supplying position S2, and causes the second blow molds 40(B) to move (retreat) from the second supplying position S2 while simultaneously moving the fourth blow molds 40(D) to the second supplying position S2.

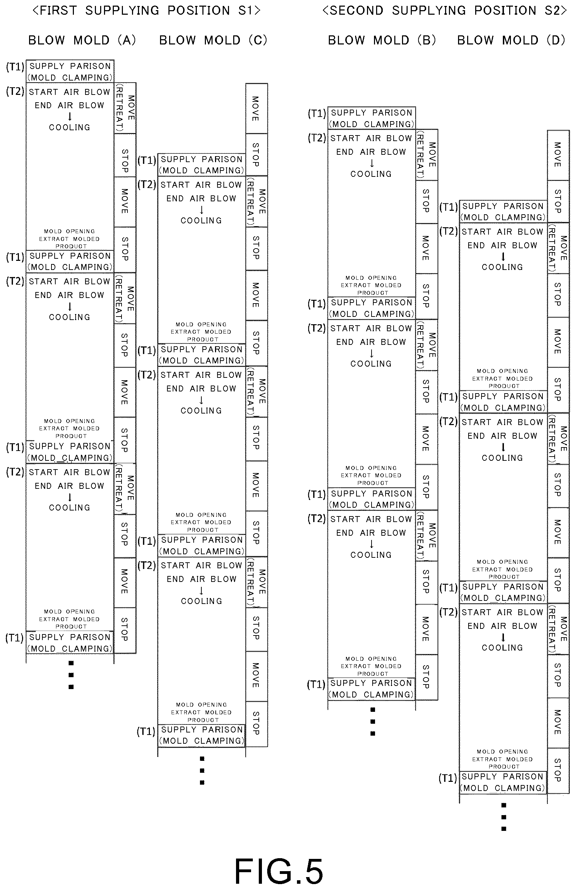

Fig. 5 shows an example of operation steps of the example shown in Fig. 4. While operation steps of the pickup chuck 10 are omitted in Fig. 5, the operations of the pickup chuck 10 with respect to the first supplying position S1 and the second supplying position S2 are similar to those of the example shown in Fig. 3.

At each blow molding part 4, the parison supplying step T1 and the blow molding step T2 are performed, and mold movement which involves operating the mold moving mechanism 5 described above is performed in parallel with the blow molding step T2. A parison is supplied to each blow mold 40 by combining an operation of the pickup chuck 10 and an operation of the mold moving mechanism 5, and in the example shown in Fig. 5, the parison P1 is sequentially supplied to the blow molds 40 in an order of the first blow molds 40(A) at the first supplying position S1, the second blow molds 40(B) at the second supplying position S2, the third blow molds 40(C) at the first supplying position S1, and the fourth blow molds 40(D) at the second supplying position S2.

Mold movement and mold stoppage are performed during a period from supplying the parison P1 to the first blow molds 40(A) at the first supplying position S1 to supplying the parison P1 to the second blow molds 40(B) at the second supplying position S2 and supplying the parison P1 to the fourth blow molds 40(D) at the second supplying position S2.

Fig. 5 shows an example of operation steps of each blow mold 40, and the parison supplying step T1 of the first blow molds 40(A) on the side of the first supplying position S1 is performed during a movement of the second blow molds 40(B) to the second supplying position S2 and a movement (retreat) of the fourth blow molds 40(D) from the second supplying position S2. After the parison supplying step T1, the first blow molds 40(A) move (retreat) from the first supplying position S1 due to mold movement, the blow molding step T2 is started in parallel with the mold movement, and the respective steps (starting and ending of air blow, cooling, mold opening, and extracting a molded product) are performed. A movement of the blow molds 40(A) during the blow molding step T2 involves moving (retreating) from the first supplying position, stopping temporarily, subsequently moving so as to return to the first supplying position S1, and stopping at the first supplying position, during which mold opening, extraction of a molded product, and the parison supplying step T1 are performed.

In addition, the third blow molds 40(C) at the first supplying position S1 moves to the first supplying position S1 simultaneously with the movement (retreat) of the first blow molds 40(A). Furthermore, the parison supplying step T1 to the third blow molds 40(C) simultaneously stops at a timing where the first blow molds 40(A) stop during the blow molding step T2, and is performed during a movement (retreat) of the second blow molds 40(B) from the second supplying position S2 and a movement of the fourth blow molds 40(D) to the second supplying position S2. Subsequently, the respective steps are performed in a similar manner to the first blow molds 40(A) described earlier.

On the other hand, the parison supplying step T1 of the second blow molds 40(B) on the side of the second supplying position S2 is performed during a movement (retreat) of the first blow molds 40(A) from the first supplying position S1 and a movement of the third blow molds 40(C) to the first supplying position S2 and, subsequently, the respective steps are performed in a similar manner to the first blow molds 40(A) described earlier.

In addition, the fourth blow molds 40(D) at the second supplying position S2 move to the first supplying position S1 simultaneously with the movement (retreat) of the second blow molds 40(B). Furthermore, the parison supplying step T1 to the fourth blow molds 40(D) simultaneously stops at a timing where the second blow molds 40(B) stop during the blow molding step T2, and is performed during a movement of the first blow molds 40(A) to the first supplying position S1 and a movement (retreat) of the third blow molds 40(C) to the first supplying position S1. Subsequently, the respective steps are performed in a similar manner to the first blow molds 40(A) described earlier.

While movement of the blow molds 40 is required in the example shown in Fig. 4, since the operation is a simple linear reciprocating operation, the blow molds 40 can be moved at a prescribed speed. In combination with the supplying of a parison by the pickup chuck 10, a movement of the blow molds 40 can be simplified and high productivity can be obtained as compared to conventional art which involves moving blow molds in a complex manner.

In addition, even in this example, since the parison P1 cut at a prescribed length from the parison P discharged from the die head 2 is grasped by the pickup chuck 10 and conveyed to each blow mold 40, the accumulation of a parison above molds and the like can be eliminated as compared to a case where the discharged parison P is directly clamped between molds, and a parison with good quality can be supplied. As a result, the quality of a molded product can be improved.

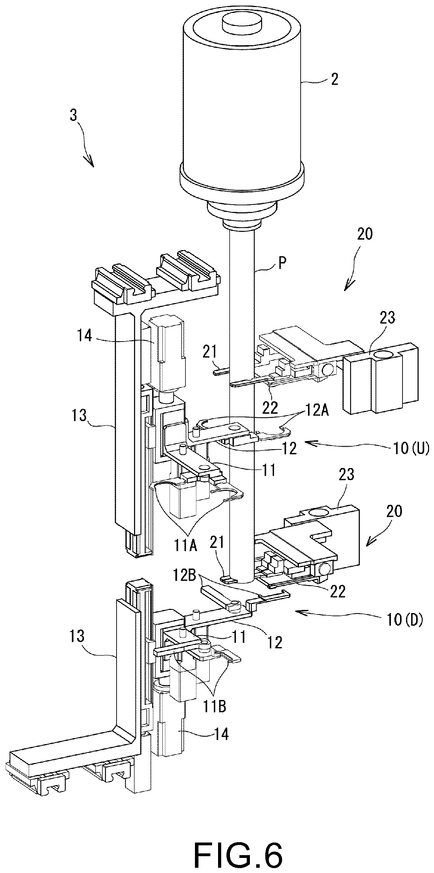

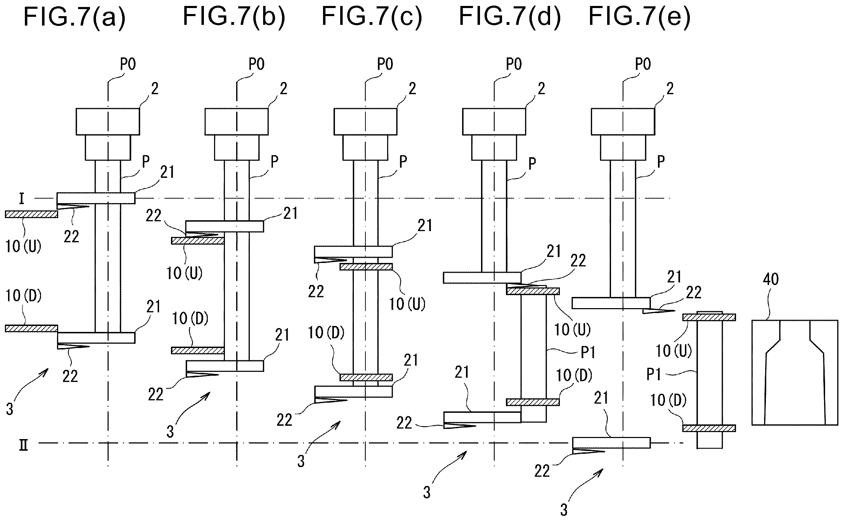

Figs. 6 and 7 show a specific configuration example and a specific operation example of the parison supplying part 3. The parison supplying part 3 which cuts, at a preset length, the parison P discharged from the die head 2 and which conveys the cut parison is provided with a pair of upper and lower pickup chucks 10, and an upper side pickup chuck 10(U) and a lower side pickup chuck 10(D) are arranged at an interval that is set in accordance with a length of the cut parison P1. In the illustrated example, the upper side pickup chuck 10(U) and the lower side pickup chuck 10(D) are both constituted by the first pickup chuck 11 and the second pickup chuck 12 shown in Fig. 2.

In addition, in order to ensure that a blow pin is inserted into a parison, the insides of the chuck parts 11A and 12A of the upper side pickup chuck 10(U) have a concave shape so that a parison can be grasped in an opened state. In contrast, the insides of the chuck parts 11B and 12B of the lower side pickup chuck 10(D) have a linear shape so that a parison can be grasped in a state where the parison is crushed. Furthermore, the upper side pickup chuck 10(U) and the lower side pickup chuck 10(D) are respectively supported by a lifting mechanism 13 so as to be ascendible and descendible upward and downward in the vertical direction, and rotations of the upper side pickup chuck 10(U) and the lower side pickup chuck 10(D) are controlled by a driving part 14.

The parison supplying part 3 shown in Fig. 6 is further provided with a pinch mechanism 20 which holds the parison P discharged from the die head 2 and which severs the parison P at a prescribed timing. The pinch mechanism 20 is provided with a pinch part 21 which holds the discharged parison P, a cutter part 22 which severs a parison, and an operating part 23 which integrally moves the pinch part 21 and the cutter part 22. The pinch mechanism 20 repeats an operation that includes holding the parison P above the chuck position of the upper side pickup chuck 10(U), moving downward while stretching the discharged parison P, and then severing the parison P at a prescribed timing.

An operation example of the pickup chuck 10 and the pinch mechanism 20 will be described using Fig. 7. While being integrated with each other, the pinch part 21 and the cutter part 22 of the pinch mechanism 20 repeat an operation of moving upward and downward along a vertical direction between a first position I close to the die head 2 and a second position II separated from the die head 2, and repeat an operation of moving downward above the discharge center P0 and an operation of moving upward at a position separated from the discharge center P0.

In addition, the pinch mechanism 20 applies tension to the parison P while moving downward after the pinch part 21 holds the parison P at the first position I. In other words, a movement speed of the pinch part 21 which moves from the first position I to the second position II is set higher than a speed of descent of the parison P. Due to a subsequent pinch part 21 holding the parison P while a preceding pinch part 21 moves downward, the parison P with the preset length is held by a pair of pinch parts 21 (See Fig.7(a)).

In contrast, the upper side pickup chuck 10(U) and the lower side pickup chuck 10(D) are held at a certain interval and operate so as to approach the parison P held by the pair of pinch parts 21 while moving downward in accordance with the movement of the pinch parts 21 (See Fig.7 (a) and Fig.7 (b)). In addition, immediately after the upper side pickup chuck 10(U) and the lower side pickup chuck 10(D) simultaneously grasp the parison P, the cutter part 22 of the pinch mechanism 20 is operated and the parison P1 is cut (See Fig.7 (c) and Fig.7 (d)). Subsequently, the parison P1 held between the upper side pickup chuck 10(U) and the lower side pickup chuck 10(D) is conveyed toward the blow molds 40 that are arranged at the first supplying position S1 or the second supplying position S2 due to a movement of the upper side pickup chuck 10(U) and the lower side pickup chuck 10(D) (See Fig.7(e)).

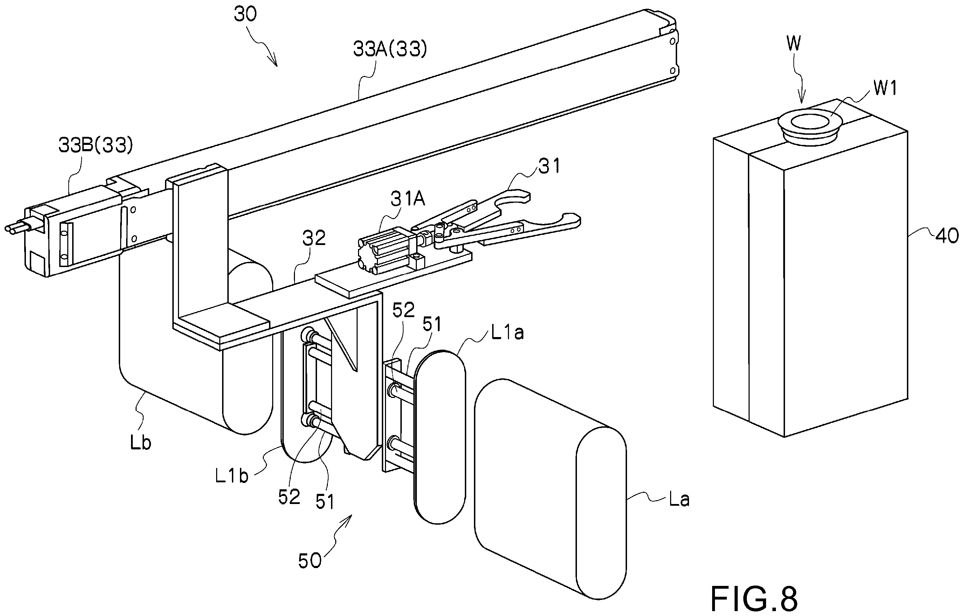

Next, a specific apparatus and operations for extracting a molded product (a bottle) from blow molds will be described. As shown in Figs. 8 to 12, in order to extract a bottle W that is a molded product from the blow molds 40, an extracting apparatus 30 is provided in the illustrated example.

As shown in Fig. 8, the extracting apparatus 30 is an apparatus for extracting the bottle W that is a molded product having been molded by the blow molds 40 from the blow molds 40 after the molding, and is provided with a gripping hand 31, a support arm 32, a moving mechanism 33, and a label holding part 50.

The gripping hand 31 is driven by an actuator 31A and grips a part (a gripped part W1) of the bottle W protruding from the blow molds 40. In the bottle W which is blow-molded by the blow molds 40, a part of the parison clamped between the blow molds 40 protrudes to the outside (upper side) of the blow molds 40 to form the gripped part W1 outside of the blow molds 40. By gripping the gripped part W1, the gripping hand 31 can grip the bottle W before the blow molds 40 open.

The support arm 32 supports the gripping hand 31 and also supports the label holding part 50. The support arm 32 is moved linearly by the moving mechanism 33 and approaches to and separates from the blow molds 40. The moving mechanism 33 is provided with a slide guide 33A which extends linearly and an actuator 33B which moves the support arm 32 along the slide guide 33A.

In order to insert a label to be attached to the bottle W into the blow molds 40, the label holding part 50 supported by the support arm 32 respectively sucks and holds one label L1a and one label L1b from label bundles La and Lb, and the label holding part 50 is provided with a suction pad 51 and a telescopic cylinder 52.

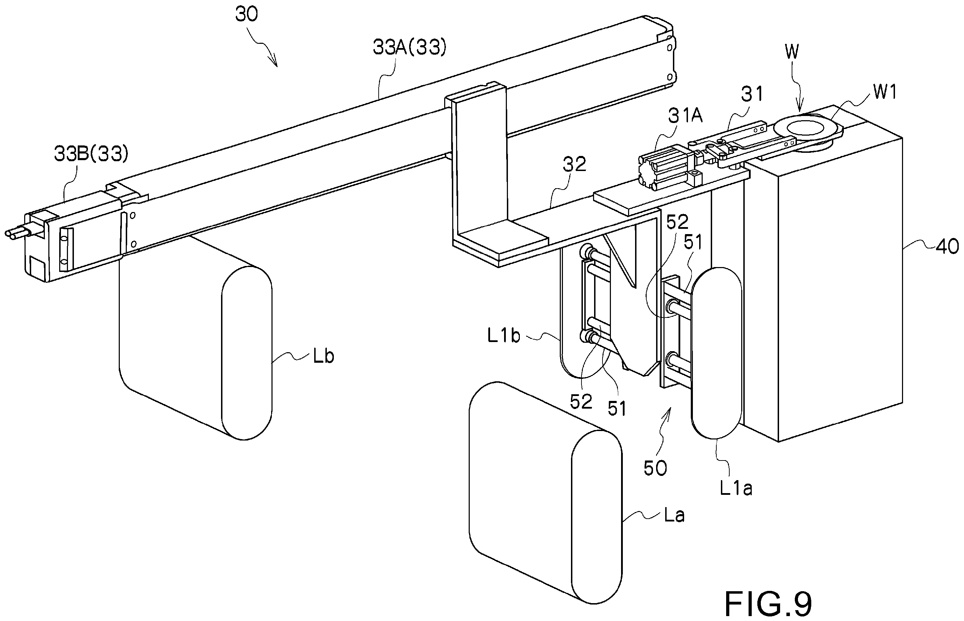

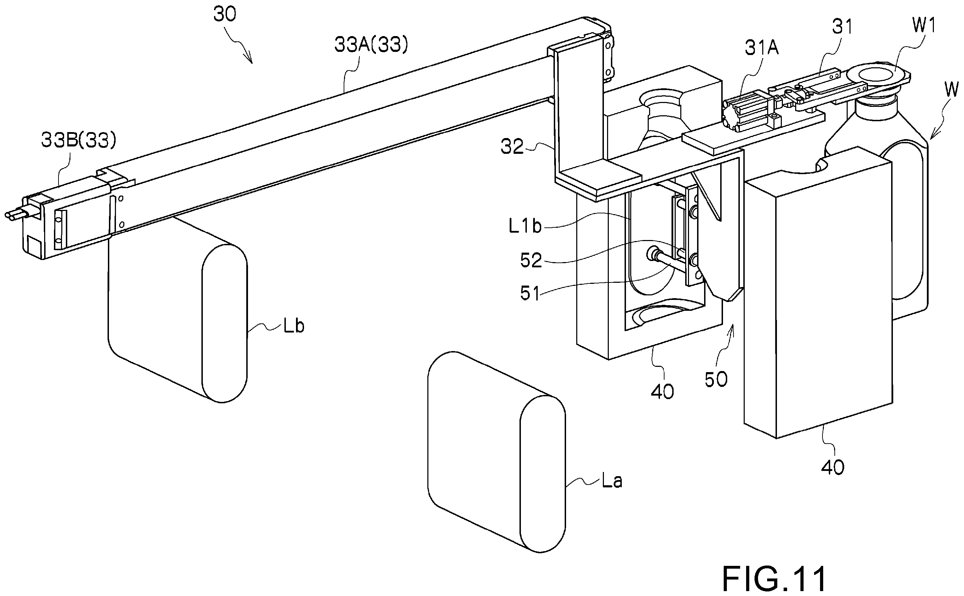

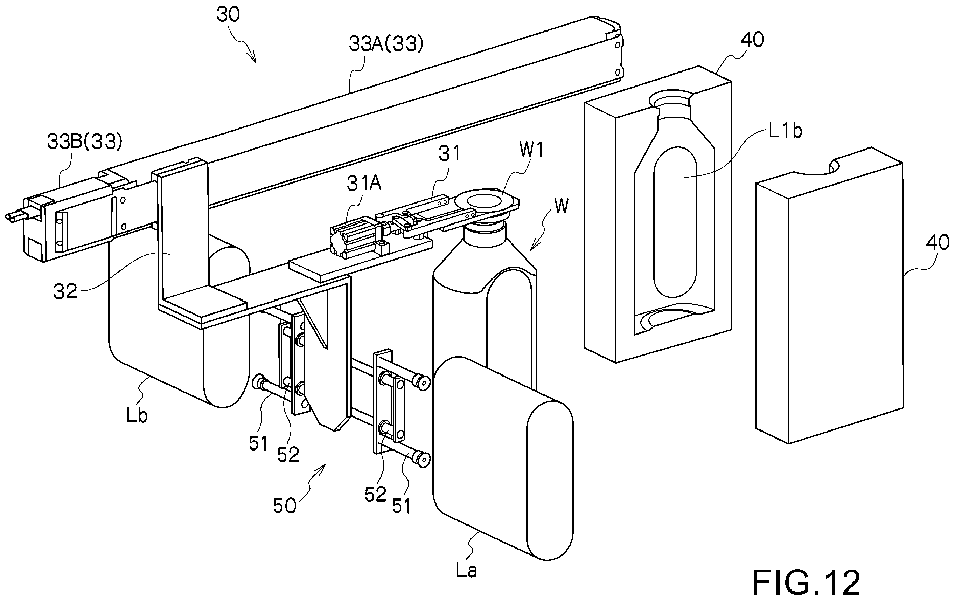

An operation of the extracting apparatus 30 will be described with reference to Figs. 8 to 12. The moving mechanism 33 in the extracting apparatus 30 moves the support arm 32 from a first position (a home position) shown in Fig. 8 to a second position (a gripping position) shown in Fig. 9 and, furthermore, after moving the support arm 32 to a third position (a label inserting position) shown in Fig. 11, once again moves the support arm 32 to the first position (the home position) as shown in Fig. 12.

As shown in Fig. 8, at the first position of the support arm 32 in the moving mechanism 33, the label holding part 50 opposes the label bundles La and Lb and holds individual labels L1a and L1b from the label bundles La and Lb. The label holding part 50 is provided with the suction pad 51 and the telescopic cylinder 52 as described above, the suction pad 51 touches the label bundles La and Lb at a position where the telescopic cylinder 52 is extended and sucks and holds one label L1a and one label L1b at this position, and the telescopic cylinder 52 changes to a contracted state.

The state shown in Fig. 8 is either a state where a blow pin (not shown) is inserted into a parison clamped between the blow molds 40 and blow molding is being performed (during blow) or a state after blow molding.

Subsequently, as shown in Fig. 9, before the blow molds 40 are opened, the moving mechanism 33 moves the support arm 32 to the second position and the gripping hand 31 grips the gripped part W1 of the bottle W at this position. At this point, the label holding part 50 supported by the support arm 32 has moved close to the blow molds 40 in a state of holding the labels L1a and L1b in accordance with the movement of the support arm 32.

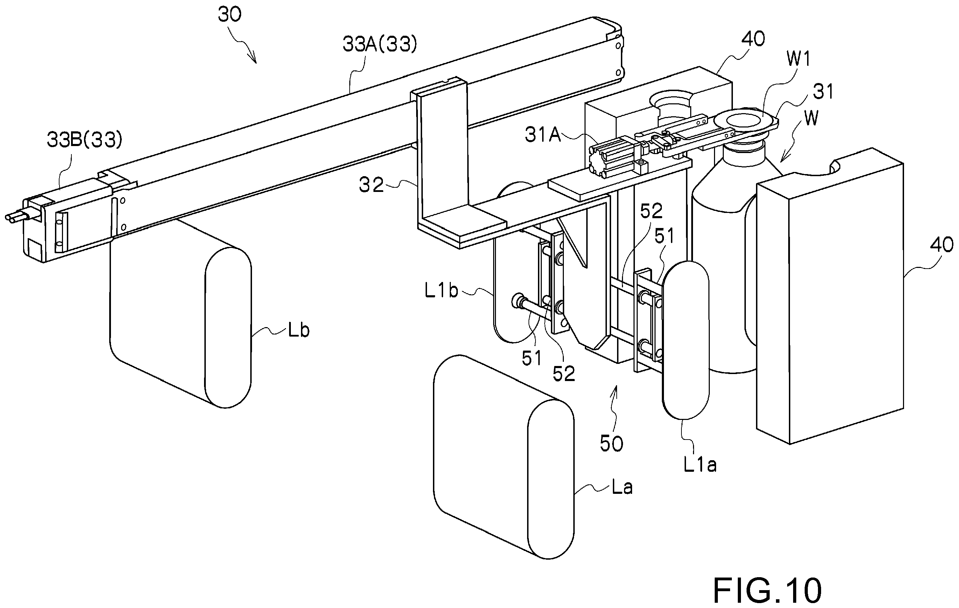

Subsequently, as shown in Fig. 10, the blow molds 40 are opened in a state where the support arm 32 is held at the second position. At this point, since the bottle W is gripped by the gripping hand 31, the bottle W is released from right and left molds. The labels L1a and L1b having been inserted into the blow molds 40 in a previous cycle are attached to the released bottle W.

Subsequently, as shown in Fig. 11, due to the support arm 32 being moved to the third position, the label holding part 50 supported by the support arm 32 is positioned between the right and left molds. At this position, the label holding part 50 extends the telescopic cylinder 52 in the contracted state and respectively inserts the labels L1a and L1b sucked and held by the suction pad 51 into the molds. While the illustrated example is an example in which the label holding part 50 respectively inserts the labels L1a and L1b into both right and left molds, this configuration is not restrictive and the labels may be inserted into only one mold. When the support arm 32 moves to the third position, the gripping hand 31 maintains a state of gripping the bottle W.

Subsequently, as shown in Fig. 12, the support arm 32 is returned to the first position. At this position, the gripping hand 31 is released from the illustrated gripping state and, at the same time, the bottle W is transferred to a conveyor by a transferring hand (not shown) and the bottle W is ejected. The label holding part 50 enters a state of opposing the label bundles La and Lb and a standby state for label holding in a next cycle.

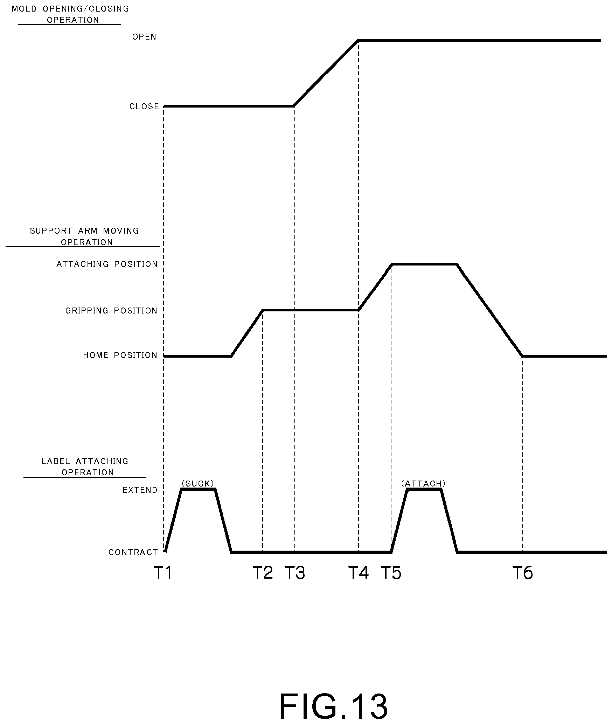

Fig. 13 is a time chart of the operations described above. In this operation example, the label holding part 50 starts an operation of sucking the labels L1a and L1b from the label bundles La and Lb at a timing T1, the support arm 32 moves from the first position (the home position) to the second position (the gripping position) and a gripping operation of the gripping hand 31 starts at a timing T2, an opening operation of the blow molds 40 starts at a timing T3, and the opening operation of the blow molds 40 ends at a timing T4. In addition, the support arm 32 starts moving from the second position (the gripping position) to the third position (the attaching position), the support arm 32 arrives at the third position (the attaching position) and an attaching operation of the label holding part 50 is started at a timing T5, and the support arm 32 is returned to the first position (the home position) at a timing T6.

In such operations, by setting the timing T2 at which the gripping hand 31 of the extracting apparatus 30 grips the bottle W so as to occur before the start timing T3 of mold opening, an operation time after the mold opening can be shortened as compared to a conventional case in which mold opening is performed in a state where a bottle is supported by a blow pin and the bottle is subsequently gripped. In addition, by moving the support arm 32 from the first position to the second position, since the label holding part 50 can be brought close to the blow molds 40, a label attaching operation can be performed in an efficient manner even when a holding position of the label bundles La and Lb is set at a position separated from the blow molds 40.

Furthermore, since the operation of moving the support arm 32 to the third position (the attaching position) is an extension of the operation of moving the support arm 32 to the second position (the gripping position), a moving operation of the gripping hand 31 and a moving operation of the label holding part 50 can be performed by one moving mechanism 30. Therefore, a moving mechanism for individually moving the label holding part can be omitted and, at the same time, installation space efficiency of the equipment can be improved.

As described above, with the blow molding apparatus 1 or a blow molding method using the blow molding apparatus 1 according to an embodiment of the present invention, the parison supplying step T1 is performed in which the parison P1 cut at a prescribed length from one parison P discharged downward from the die head 2 is distributed and conveyed by a movement of the pickup chuck 10 in the parison supplying part 3 to the first supplying position S1 and the second supplying position S2 respectively provided to the right and left of the discharge center P0, and independent blow molding steps T2 are performed by blow molding parts 4 respectively provided at the first supplying position S1 and the second supplying position S2.

Accordingly, blow molding steps of various modes accommodating high-mix, low-volume production can be performed with a small number of blow molds 40 and, at the same time, a movement of the heavy blow molds 40 can be minimized by adopting the pickup chuck 10, and highly efficient blow molding can be executed by causing step times of the blow molding steps T2 performed at the first supplying position S1 and the second supplying position S2, respectively, to advance so as to partially overlap each other. Therefore, highly productive blow molding can be performed despite having an equipment configuration suitable for high-mix, low-volume production.

In addition, with the blow molding apparatus 1 and the blow molding method according to an embodiment of the present invention, since the discharged parison P is cut at a preset length and supplied to the blow molds 40 by the parison supplying part 3, the parison P1 with reduced deformation and good quality can be supplied to the blow molds 40 and a high-quality molded product can be obtained by blow molding. In particular, as shown in Fig. 7, by grasping and conveying the parison P that is discharged downward while moving the pickup chuck 10 (the upper side pickup chuck 10(U) and the lower side pickup chuck 10(D)) downward, the parison P1 with reduced deformation can be cut without waste and the parison P1 with good quality can be supplied in an efficient manner.

As described above, the blow molding apparatus 1 and the blow molding method according to an embodiment of the present invention are capable of improving productivity in blow molding while being suitable for high-mix, low-volume production and are capable of obtaining a high-quality molded product by supplying a good-quality parison to molds.

While embodiments of the present invention have been described in detail with reference to the drawings, it is to be understood that specific configurations of the present invention are not limited to the embodiments and that various design modifications and the like may be made without departing from the spirit and scope of the invention. In addition, the embodiments described above may be implemented so as to combine respective techniques thereof as long as there are no contradictions, problems, and the like in an object, a configuration, and the like of such implementations.

### [Reference Signs List]

- 1: Blow molding apparatus
- 2: Die head
- 3: Parison supplying part
- 4: Blow molding part
- 40: (A, B, C, D) Blow mold
- 5: Mold moving mechanism
- 10: Pickup chuck
- 10(U): Upper side pickup chuck
- 10(D): Lower side pickup chuck
- 11: First pickup chuck
- 12: Second pickup chuck
- 10P: Rotation center
- 10A, 11A, 12A, 11B, 12B: Chuck part
- 13: Lifting mechanism
- 14: Driving part
- 20: Pinch mechanism
- 21: Pinch part
- 22: Cutter part
- 23: Operating part
- 30: Extracting apparatus
- 31: Gripping hand
- 31A: Actuator
- 32: Support arm
- 33: Moving mechanism
- 33A: Slide guide
- 33B: Actuator
- 50: Label holding part
- 51: Suction pad
- 52: Telescopic cylinder
- P, P1: Parison
- P0: Discharge center
- S1: First supplying position
- S1: Second supplying position
- W: Molded product (bottle)
- La, Lb: Label bundle
- L1a, L1b: Label

## Claims

1. A blow molding apparatus comprising:
a die head which discharges a parison;
a parison supplying part which cuts the discharged parison at a preset length and conveys the cut parison; and
a blow molding part in which the supplied parison is clamped between blow molds so as to perform blow molding, wherein
said parison supplying part includes a pickup chuck which conveys the cut parison alternately to a first supplying position set on one of right and left sides with respect to a discharge center of said die head and a second supplying position set on the other of right and left sides with respect to said discharge center, and
said blow molding part performs blow molding of the supplied parison with said blow molds that are arranged at said first supplying position and said second supplying position, respectively.

2. The blow molding apparatus according to claim 1, wherein
in said blow molding part,
air blow to said blow molds that are arranged at said first supplying position and said second supplying position, respectively, is started before the parison is supplied to said blow molds that are arranged at one of said first supplying position and said second supplying position.

3. The blow molding apparatus according to claim 1 or 2, wherein first and third blow molds are arranged at said first supplying position and second and fourth blow molds are arranged at said second supplying position,
the blow molding apparatus further comprising:
a mold moving mechanism which causes said blow molds to retreat from said first supplying position and which moves said blow molds to said first supplying position; and
a mold moving mechanism which causes said blow molds to retreat from said second supplying position and which moves said blow molds to said second supplying position.

4. The blow molding apparatus according to any one of claims 1 to 3, wherein said pickup chuck conveys the parison to said first supplying position and said second supplying position by grasping the parison on one end side of said pickup chuck and rotating around a rotation center provided on the other end side of said pickup chuck.

5. The blow molding apparatus according to claim 4, wherein said pickup chuck includes a first pickup chuck and a second pickup chuck provided so as to form a preset angle therebetween around said rotation center, one end side of said second pickup chuck is positioned at said discharge center in a state where one end side of said first pickup chuck has moved to said first supplying position, and the one end side of said first pickup chuck is positioned at said discharge center in a state where the one end side of said second pickup chuck has moved to said second supplying position.

6. The blow molding apparatus according to any one of claims 1 to 5, wherein said pickup chuck is provided as a pair of upper and lower pickup chucks, the upper side pickup chuck grasps the parison in an opened state, and the lower side pickup chuck grasps the parison in a state where the parison is crushed.

7. The blow molding apparatus according to any one of claims 1 to 6, wherein said parison supplying part includes a pinch mechanism which repeats an operation that includes holding the parison above a chuck position of said pickup chuck, moving downward while stretching the discharged parison, and then severing the parison at a prescribed timing.

8. The blow molding apparatus according to any one of claims 1 to 7, wherein while moving downward, said pickup chuck grasps the parison discharged downward.

9. The blow molding apparatus according to any one of claims 1 to 8, further comprising an extracting apparatus which extracts a molded product from said blow molds, wherein said extracting apparatus includes: a gripping hand which grips a part of the molded product protruding from said blow molds; a support arm which supports said gripping hand; a moving mechanism which causes said support arm to approach to and separate from said blow molds; and a label holding part which is supported by said support arm and which holds a label to be inserted into said blow molds.

10. A blow molding method comprising:
a parison supplying step of cutting, at a preset length, a parison discharged from a die head and conveying the cut parison; and
a blow molding step of performing blow molding of the supplied parison with blow molds, wherein
said parison supplying step conveys the parison discharged from said die head alternately to a first supplying position set on one of right and left sides with respect to a discharge center of said die head and a second supplying position set on the other of right and left sides with respect to said discharge center, and
said blow molding step is performed at said blow molds that are arranged at said first supplying position and said second supplying position, respectively.

11. The blow molding method according to claim 10, wherein
in said blow molding step,
air blow to said blow molds that are arranged at said first supplying position and said second supplying position, respectively, is started before the parison is supplied to said blow molds that are arranged at one of said first supplying position and said second supplying position.

12. The blow molding method according to claim 10 or 11, wherein
after the parison supplying step of supplying the parison to first and third blow molds at said first supplying position, said blow molds are caused to retreat from said first supplying position and said blow molds are moved to said first supplying position, and
after the parison supplying step of supplying the parison to second and fourth blow molds at said second supplying position, said blow molds are caused to retreat from said second supplying position and said blow molds are moved to said second supplying position.

13. The blow molding method according to any one of claims 10 to 12, wherein a molded product is gripped before opening of said blow molds; after the opening of said blow molds, said molded product is moved in the gripped state thereby moving a label to be positioned between said blow molds; and said label is inserted into said blow molds.
